# EUROPÄISCHE PATENTSCHRIFT

(11) **EP 1 066 184 B1**
(45) Veröffentlichungstag und Bekanntmachung des Hinweises auf die Patenterteilung: **02.05.2003**
(21) Anmeldenummer: 99913198.0
(22) Anmeldetag: 27.02.1999
(51) Int. Cl.: B60T 13/52, F16C 11/06

(54) **AUFNAHME FÜR EIN ALS KUGELKOPF AUSGEBILDETES ENDE EINES STÖSSELS**
HOUSING FOR A TAPPET END WHICH IS CONFIGURED AS A BALL HEAD
LOGEMENT POUR UNE EXTREMITE EN FORME DE TETE SPHERIQUE D'UN POUSSOIR

(30) Priorität: 28.03.1998 DE 19813929
(43) Veröffentlichungstag der Anmeldung: 10.01.2001
(73) Patentinhaber: Siemens Aktiengesellschaft, 80333 München (DE)
(72) Erfinder: MARTINOVSKY, Jan, D-61449 Steinbach (DE)
(86) Internationale Anmeldenummer: EP9901294
(87) Internationale Veröffentlichungsnummer: WO99050118

(56) Entgegenhaltungen:
- EP-A- 0 768 473
- DE-A- 2 135 299
- US-A- 4 318 627

## Beschreibung

Die Erfindung betrifft ein Kugelgelenk mit einer Aufnahme und einem Stößel, der ein als Kugelkopf ausgebildetes Ende aufweist, wobei die Aufnahme insbesondere für eine Kolbenstange eines Bremszylinders eines Kraftfahrzeugs vorgesehen ist, wobei über die Aufnahme und den Kugelkopf eine translatorische Bewegung des Stößels mit einer rotatorischen Bewegung eines mit der Aufnahme verbundenen Bauteils, insbesondere eines Pedalarms eines Bremspedals, kuppelbar ist, wobei die Aufnahme einen topfförmigen Hohlkörper und einen in dem Hohlkörper angeordneten elastischen Einsatzkörper umfaßt und wobei der Kugelkopf von dem Einsatzkörper mittels eines Sicherungsmittels im Inneren des Hohlkörpers gehalten und gegen den Boden des Hohlkörpers vorgespannt ist, wobei der elastische Einsatzkörper mit einer Öffnung versehen ist.

Ein derartiges Kugelgelenk ist aus der US-A-4 318 627 bekannt.

Solche Kugelgelenke sind beispielsweise erforderlich, um den Pedalhebel eines Bremspedals mit dem Kugelkopf eines Bremszylinders gelenkig zu verbinden und die Pedalkraft auf den Stößel sicher zu übertragen. Der Kugelkopf wird hierzu in eine Kugelpfanne, welche den Kugelkopf über mehr als 180° umschließt, eingesetzt, wodurch eine gelenkige Anbindung ermöglicht wird. Der Kugelkopf bildet hierbei mit dem Stößel und dem Zylinder eine unlösbare Einheit, weshalb die Kugelpfanne teilbar oder derart elastisch verformbar ausgeführt sein muß, dass der Kugelkopf in die Kugelpfanne eingeclipst werden kann.
Geteilte Kugelpfannen erfordern einen unerwünscht hohen Montageaufwand. Nachteilig bei solchen elastischen Aufnahmen erweist sich, dass die Verbindung zwischen der Aufnahme und dem Kugelkopf beim Überschreiten einer höchstzulässigen Kraft gewaltsam getrennt werden kann. Eine zur Vermeidung dieser Gefahr starke Klemmung des Kugelkopfes schränkt die Beweglichkeit des Kugelkopfes unerwünscht stark ein. Weiterhin wirkt sich nachteilig aus, dass die von dem Motor verursachten Vibrationen von dem Kugelkopf auf die Aufnahme übertragen werden und dort langfristig zu Verschleiß und damit auch zu einem Spiel in der Kraftübertragung führen. Aus Sicherheitsgründen muß dies jedoch vermieden werden, insbesondere bei Bremsanlagen, so dass in diesem Fall der Austausch der betroffenen Bauteile erforderlich wird.

Der Erfindung liegt das Problem zugrunde, eine Aufnahme für einen Kugelkopf so zu gestalten, dass diese zuverlässig und weitgehend verschleißfrei arbeitet und gleichzeitig einfach zu montieren ist.

Dieses Problem wird erfindungsgemäß dadurch gelöst, dass die Öffnung derart elastisch ausgeführt ist, dass sie im montierten Zustand gegen den mit dem Kugelkopf verbundenen Stößel anliegt und zur Montage so weit dehnbar ist, dass der Kugelkopf durch sie hindurchführbar ist.

Hierdurch wird eine einteilige Ausführungsform des Einsatzkörpers ermöglicht und die Verwendung von unlösbaren Einheiten aus Kugelkopf, Stößel und Zylinder wesentlich vereinfacht.

Der Kugelkopf wird von dem Einsatzkörper so fixiert, dass ein Herausrutschen des Kugelkopfes auch bei hoher Belastung nicht bzw. nur durch Zerstörung des Sicherungsmittels möglich ist. Die aufgebrachte Kraft wird daher über die Aufnahme und den Einsatzkörper sicher auf den Kugelkopf und von dort beispielsweise auf den Stößel des Bremszylinders übertragen. Gleichzeitig sorgt die Ausführung des Einsatzkörpers als elastisches Element, z. B. Elastomer, für eine weitgehende Absorption von Vibrationen, die bei einem Kraftfahrzeug vor allem durch den Antrieb verursacht und über den Kugelkopf in die Aufnahme eingeleitet werden.

Besonders vorteilhaft ist hierbei eine Weiterbildung der Erfindung, bei der die Aufnahme einen weiteren, in dem Hohlkörper angeordneten Einsatzkörper besitzt, so dass der Kugelkopf mittels des Sicherungsmittels zwischen den beiden Einsatzkörpern in dem Hohlkörper fixiert ist. Auf die Weise läßt sich eine besonders sichere und dauerhafte Fixierung des Kugelkopfes in der Aufnahme erreichen. Der zweite Einsatzkörper kann hierzu beispielsweise als Sinterbauteil ausgeführt sein. Der Kugelkopf liegt bei dieser Ausführung vorzugsweise gegen die beiden Einsatzkörper an, wodurch auf eine spezielle Ausgestaltung der inneren Oberfläche des Hohlkörpers entsprechend der Kontur des Kugelkopfes verzichtet werden kann.

Die Aufnahme kann einen weiteren, in dem Hohlkörper angeordneten Einsatzkörper besitzen, so dass der Kugelkopf mittels des Sicherungsmittels zwischen den beiden Einsatzkörpern in dem Hohlkörper fixiert ist.

Eine vorteilhafte Weiterbildung der Erfindung ist gegeben, wenn der Kugelkopf von den beiden Einsatzkörpern dichtend eingeschlossen ist. Das Eindringen von Schmutzpartikeln oder Feuchtigkeit wird dadurch wirkungsvoll vermieden. Hierdurch wird der Verschleiß an dem Kugelkopf reduziert und somit die Lebensdauer der Aufnahme erhöht. Weiterhin werden Schmierstoffe am Austreten gehindert, wodurch aufwendige Wartungsarbeiten entfallen.

Dies ist insbesondere mit einer weiteren Ausführungsform besonders gut gelöst, bei der zumindest ein Einsatzkörper eine ein Schmierstoffmagazin bildende Ausnehmung besitzt. Hierdurch kann die Menge des für die Schmierung des Kugelkopfes zur Verfügung stehenden Schmierstoffes und damit die Lebensdauer der Lagerung erhöht werden.

Eine vorteilhafte Ausführungsform ist dann gegeben, wenn der Kugelkopf von dem Einsatzkörper über etwa 180°. umschlossen ist. Hierdurch wird das Einsetzen des Kugelkopfes in den Einsatzkörper erleichtert, indem der Einsatzkörper eine Halbschale bildet.

Die erforderliche Dehnung des Einsatzkörpers ist dann besonders leicht möglich, wenn der elastische Einsatzkörper an seinem Umfang eine radiale Einschnürung aufweist. Hierdurch lassen sich im wesentlichen zwei Vorteile erreichen. Zum einen ermöglicht die Einschnürung durch die Reduzierung der Materialstärke eine erleichterte Dehnbarkeit, wodurch das Hindurchführen des Kugelkopfes vereinfacht wird. Zum anderen ist der Einsatzkörper leicht komprimierbar und legt sich gegen die Oberfläche des Kugelkopfes gleichmäßig an, wodurch gleichzeitig auch ein Toleranzausgleich geschaffen ist.

Eine besonders einfache Ausführungsform der Erfindung ist dabei gegeben, wenn der Hohlkörper als einseitig geschlossener Hohlzylinder ausgeführt ist. Der derart beispielsweise mit einem Deckel versehene Hohlzylinder läßt sich dadurch einerseits leicht mit einem Befestigungselement zur Anbindung an weitere Bauteile versehen. Andererseits verbessert die Ausführung der Aufnahme als einseitig geschlossener Hohlzylinder die Stabilität und Haltbarkeit der Aufnahme. Weiterhin kann das geschlossene Ende des Hohlzylinders als Widerlager für das Sicherungsmittel dienen; welches so den Kugelkopf in dem Hohlzylinder fixiert.

Dies kann durch eine besonders vorteilhafte Weiterbildung geschehen, bei dem der Hohlkörper eine als Bajonettverschluß ausgeführte Ausnehmung aufweist, welche zum Fixieren des eingesetzten Sicherungsmittels in dem Hohlkörper ausgeführt ist.

Hierzu besitzt der Hohlkörper lediglich eine entsprechend geformte Ausnehmung in seiner Mantelfläche, so dass das gegen die Rückstellkraft des elastischen Einsatzkörpers in den Hohlkörper eingesetzte Sicherungsmittel durch eine Drehbewegung formschlüssig in der Ausnehmung gesichert ist. Das Sicherungsmittel ist hierzu mit zumindest zwei über die Innenbreite des Hohlkörpers hinausgehenden Erweiterungen versehen. Diese Ausführungsform ist dadurch günstig in der Herstellung und kann leicht montiert oder demontiert werden.

Je nach Verwendung kann es wünschenswert sein, die Spannung der den Kugelkopf umschließenden Einsatzkörper individuell anzupassen. Dies könnte durch Austausch eines Einsatzkörpers gegen einen Einsatzkörper anderer Außenabmessungen und/oder anderer Werkstoffeigenschaften geschehen. Besonders vorteilhaft ist hierzu allerdings eine Weiterbildung der Erfindung, bei der der Bajonettverschluß zur Aufnahme zusätzlicher Sicherungsmittel ausgeführt ist.

Hierbei wird mit jedem zusätzlichen Sicherungsmittel der verbleibende Zwischenraum verringert und die Spannung der Einsatzkörper erhöht. So können die Fertigungstoleranzen relativ groß gehalten werden und die Anpassung an den Kugelkopf bei der Montage durch eine unterschiedliche Anzahl der Sicherungsmittel vorgenommen werden. Weiterhin kann auf gleichem Wege das Nachlassen der Rückstellkraft des elastischen Einsatzkörpers während der Lebensdauer der Aufnahme ausgeglichen werden, ohne dass hierzu der Austausch des vorhandenen Einsatzkörpers erforderlich wäre. Dabei braucht die Aufnahme zum Einsetzen weiterer Sicherungsmittel nicht geöffnet werden, so dass das Eindringen von Verschmutzungen während der Anpassung ausgeschlossen werden kann.

Eine günstige Weiterbildung der Erfindung ist dann gegeben, wenn das Sicherungsmittel ein Federblech ist. Die auf den Einsatzkörper übertragene Spannung kann hierbei durch Auswahl eines geeigneten Sicherungsmittels mit einer entsprechenden Federkraft voreingestellt werden. Die Elastizität des elastischen Einsatzkörpers dient demnach im wesentlichen der Aufnahme von Schwingungen, wobei die Spannung zum Fixieren des Kugelkopfes durch das Federblech eingeleitet wird.

Das Sicherungsmittel könnte seitlich neben dem Kugelkopf angeordnet sein. Um die daraus resultierende ungleichmäßige Kräfteverteilung auszugleichen, müßten dann weitere Sicherungsmittel vorgesehen werden. Eine besonders vorteilhafte Ausführungsform stellt eine gleichmäßige Kraftverteilung sicher, wenn das Sicherungsmittel eine Öffnung zum Durchführen des Kugelkopfes besitzt. Hierdurch läßt sich eine gleichmäßige Übertragung der eingeleiteten Kraft von dem Einsatzkörper auf den Kugelkopf erreichen.

Hierbei erweist es sich als besonders vorteilhaft, wenn das Sicherungsmittel Abschnitte aufweist, die als Sperrklinken ausgeführt sind und das Hindurchführen des Kugelkopfes in lediglich einer Richtung gestatten. Hierdurch läßt sich eine weiter verbesserte Betriebssicherheit gewährleisten, da beim Herausreißen des Kugelkopfes aus seiner Aufnahme vorher die Sperrklinken plastisch verformt werden und hierfür erhebliche Kräfte erforderlich sind. Gleichzeitig läßt sich die Montage eines derart ausgeführten Sicherungsmittels weiter vereinfachen.

Eine Weiterbildung der Erfindung ist besonders vorteilhaft, bei der die Aufnahme an einem Hebel angeordnet ist und in ein Verbindungselement eingreift, welches zur Aufnahme der zu dem Stößel nicht axialen Kräfte ausgeführt ist. Hierdurch kann die Aufnahme von Kräften entlastet werden, die beispielsweise während der Schwenkbewegung durch die Veränderung der Winkellage zwischen dem Stößel und dem Hebel entstehen und quer zu der Schwenkachse angreifen. Hierzu werden die nicht axialen Kräfte von dem Verbindungselement aufgenommen und dadurch die Lagerung des Hebels entlastet.

Hierzu ist es besonders günstig, wenn der Hebel und das Verbindungselement um eine gemeinsame Achse schwenkbar angeordnet sind. Hierdurch führen das Verbindungselement und der Hebel die gleiche Bewegung aus, wobei lediglich die axialen Kräfte von dem Hebel aufgenommen werden. Das führt zu einer Entlastung der Lagerung des Hebels, wobei zugleich eine uneingeschränkte Bewegung des Hebels ermöglicht wird.

Die Erfindung läßt verschiedene Ausführungsformen zu. Zur weiteren Verdeutlichung ihres Grundprinzips sind zwei davon in der Zeichnung dargestellt und werden nachfolgend beschrieben. Diese zeigt in
- Figur 1: in einer geschnittenen Seitenansicht die Elemente einer erfindungsgemäßen Aufnahme,
- Figur 2: die Aufnahme in einer geschnittenen Seitenansicht in einem montierten Zustand,
- Figur 3: ein Sicherungsmittel in einer Draufsicht,
- Figur 4: einen Hebel mit einer daran angeordneten weiteren erfindungsgemäßen Aufnahme in einer Seitenansicht,
- Figur 5: den Hebel in einer Draufsicht.

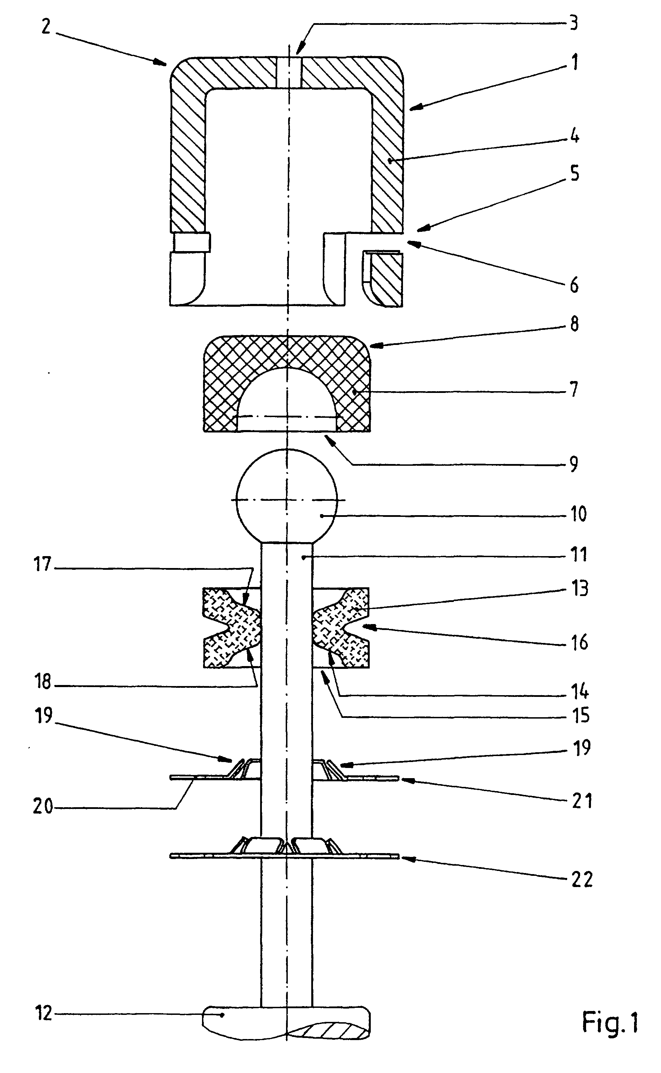

Die Figur 1 zeigt in einer seitlichen, teilweise geschnittenen Darstellung die einzelnen Elemente einer Aufnahme 1 in einem nicht montierten Zustand. Zu erkennen ist ein als einseitig geschlossene Hülse ausgeführter Hohlkörper 2, welcher im oberen Abschnitt eine die Montage erleichternde und dem Druckausgleich dienende Öffnung 3 besitzt. In seinem unteren Abschnitt ist eine Mantelfläche 4 des Hohlkörpers 2 mit einer als Bajonettverschluß 5 ausgeführten Ausnehmung 6 versehen. Unterhalb des Hohlkörpers 2 ist ein als Kugelpfanne 7 ausgeführter Einsatzkörper 8 dargestellt, welcher beispielsweise ein Sinterbauteil sein kann. In eine in etwa halbkugelförmige Vertiefung 9 der Kugelpfanne 7 ist ein Kugelkopf 10 einsetzbar, welcher einteilig mit einem Stößel 11 eines nur abschnittsweise dargestellten Hydraulikzylinders 12 verbunden ist. Ein weiterer, als Elastomer ausgeführter Einsatzkörper 13 ist auf den Stößel 11 aufgeschoben und liegt mit einem Wulst 14, welcher eine Öffnung 15 begrenzt, gegen den Umfang des Stößels 11 an. Der Einsatzkörper 13 besitzt mittig an seinem Umfang dem Wulst 14 gegenüberliegend eine Einschnürung 16. Diese ermöglicht eine Kompression des Einsatzkörpers 13 in Richtung der Mittelachse der Aufnahme 1 und eine elastische Dehnung der Öffnung 15, so daß der Kugelkopf 10 hindurchgeführt werden kann. Weiterhin besitzt der Einsatzkörper 13 jeweils an seiner Ober- und Unterseite eine in etwa entsprechend der Oberfläche des Kugelkopfes 10 vorgeformte Vertiefung 17 und 18. Die untere Vertiefung 18 des Einsatzkörpers 13 dient dem in etwa formschlüssigen Einsetzen mehrerer Sperrklinken 19 eines als Federblech 20 ausgeführten Sicherungsmittels 21. Die Sperrklinken 19 sind derart elastisch verformbar, daß sie das Hindurchführen des Kugelkopfes 10 in Montagerichtung ermöglichen, in Gegenrichtung jedoch den Durchgang versperren. Ein Herausreißen des Kugelkopfes 10 aus der Aufnahme 1 bei Überschreitung der Sperrkraft bewirkt daher eine plastische Verformung der Sperrklinken 19 und eine Zerstörung des Sicherungsmittels 21. Unterhalb des geschnitten dargestellten Sicherungsmittels 21 ist zur Verdeutlichung ein weiteres, baugleiches Sicherungsmittel 22 in einer nicht geschnittenen Seitenansicht dargestellt.

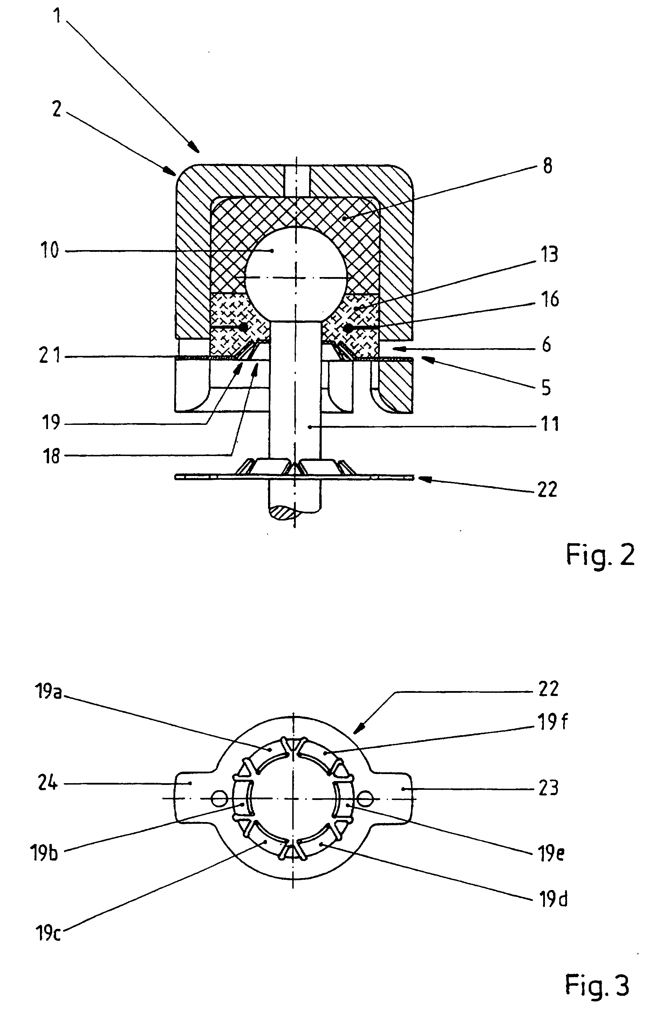

Figur 2 zeigt in einer überwiegend geschnittenen Darstellung die in Figur 1 dargestellte Aufnahme 1 in einem montierten Zustand. Der Kugelkopf 10 ist hierbei im inneren des Hohlkörpers 2 von den beiden Einsatzkörpern 8 und 13 dichtend umschlossen. Das Sicherungsmittels 21 ist hierbei gegen die Rückstellkraft des elastischen, verformten Einsatzkörpers 13, dessen Einschnürung 16 hierbei zusammengepreßt ist, in die Ausnehmung 6 des Bajonettverschlusses 5 eingesetzt. In dieser Position hat der Einsatzkörper 13 seine Elastizität weitestgehend verloren. Die Sperrklinken 19 des Sicherungsmittels 21 liegen hierbei gegen die untere Vertiefung 18 des Einsatzkörpers 13 an. Das zweite Sicherungsmittel 22 befindet sich noch in einer Position außerhalb der Aufnahme 1 auf dem nur abschnittsweise dargestellten Stößel 11. Zur weiteren Erhöhung der Spannung kann das Sicherungsmittel 22 zusätzlich zum bereits montierten Sicherungsmittel 21 in den Bajonettverschluß 5 eingesetzt werden, wobei das erste Sicherungsmittel 21 nach oben geschoben werden muß und hierbei den Einsatzkörper 13 weiter komprimiert.

Figur 3 zeigt das Sicherungsmittel 22 in einer Draufsicht. Zu erkennen sind sechs gleichmäßig über den Umfang verteilte Sperrklinken 19a, 19b, 19c, 19d, 19e und 19f, die zur Mitte hin geneigt sind. Weiterhin sind zwei gegenüberliegende Erweiterungen 23 und 24 dargestellt, mit denen das Sicherungsmittel 22 in die in den Figuren 1 und 2 dargestellte Ausnehmung 6 des Hohlkörpers 2 einsetzbar ist.

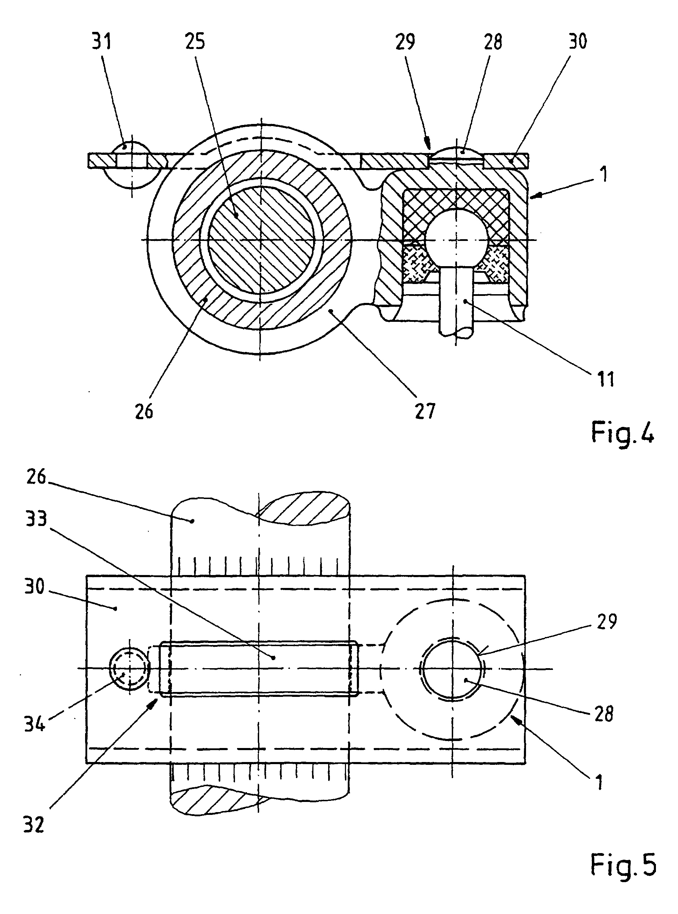

Figur 4 zeigt in einer seitlichen, teilweise geschnittenen Darstellung eine Aufnahme 1, die an einem Hebel 27 angeordnet ist, welcher seinerseits mit einem um eine Achse 25 schwenkbaren Pedalrohr 26, z. B. einer Bremspedalanordnung eines Kraftfahrzeugs verbunden ist. Die Aufnahme 1 entspricht weitgehend der in Figur 2 dargestellten Ausführungsform und hat zusätzlich einen gewölbten Zapfen 28, welcher in eine Ausnehmung 29 eines ebenfalls an dem Pedalrohr 26 angeordneten Verbindungselementes 30 eingreift. Mittels dieses Zapfens 28 werden die zu dem nur teilweise dargestellten Stößel 11 nicht parallelen Kräfte in das Verbindungselement 30 eingeleitet und von dort auf das Pedalrohr 26 übertragen, wodurch eine nicht dargestellte Lagerung des Hebels 27 entlastet wird. Das Verbindungselement 30 weist zusätzlich einen Anschlag 31 zur Begrenzung der maximalen Auslenkung des gemeinsam mit dem Verbindungselement 30 schwenkbaren Pedalrohres 26 auf. Der Hebel 27 ist gegenüber dem Pedalrohr 26 mit geringem Spiel und verdrehbar gelagert.

Figur 5 zeigt einen Abschnitt des in Figur 4 dargestellten Pedalrohres 26 mit dem daran angeordneten Verbindungselement 30 in einer Draufsicht. Zu erkennen ist die rechteckige Form des Verbindungselementes 30, welches mit einer Aussparung 32 für einen an dem Pedalrohr angeordneten Hebelabschnitt 33 des teilweise gestrichelt dargestellten Hebels 27 versehen ist. Weiterhin ist der in die Ausnehmung 29 eingesetzte Zapfen 28 der gestrichelt dargestellten Aufnahme 1 erkennbar. Der Hebel 27 befindet sich in der dargestellten Position in seiner Ruhelage, so daß der Zapfen 28 in der Ausnehmung 29 zentriert ist und daher keine Kräfte auf das Verbindungselement 30 überträgt. An dem der Ausnehmung 29 gegenüberliegenden Seite des Verbindungselementes 30 ist eine den in Figur 4 dargestellten Anschlag 31, der z. B. ein gummielastisches Element sein kann, aufnehmende Bohrung 34 zu erkennen.

## Patentansprüche

1. Kugelgelenk mit einer Aufnahme (1) und einem Stößel (11), der ein als Kugelkopf (10) ausgebildetes Ende aufweist, wobei die Aufnahme (1) insbesondere für eine Kolbenstange eines Bremszylinders eines Kraftfahrzeugs vorgesehen ist, wobei über die Aufnahme (1) und den Kugelkopf (10) eine translatorische Bewegung des Stößels (11) mit einer rotatorischen Bewegung eines mit der Aufnahme (1) verbundenen Bauteils, insbesondere eines Pedalarmes eines Bremspedals, kuppelbar ist, wobei die Aufnahme (1) einen topfförmigen Hohlkörper (2) und einen in dem Hohlkörper (2) angeordneten elastischen Einsatzkörper (13) umfaßt und wobei der Kugelkopf (10) von dem Einsatzkörper (13) mittels eines Sicherungsmittels (21, 22) im Inneren des Hohlkörpers (2) gehalten und gegen den Boden des Hohlkörpers (2) vorgespannt ist, wobei der elastische Einsatzkörper (13) mit einer Öffnung (15) versehen ist, **dadurch gekennzeichnet, dass** die Öffnung (15) derart elastisch ausgeführt ist, dass sie im montierten Zustand gegen den mit dem Kugelkopf (10) verbundenen Stößel (11) anliegt und zur Montage so weit dehnbar ist, dass der Kugelkopf (10) durch sie hindurchführbar ist.

2. Kugelgelenk nach Anspruch 1, **dadurch gekennzeichnet, daß** die Aufnahme (1) einen weiteren, in dem Hohlkörper (2) angeordneten Einsatzkörper (8) besitzt, so daß der Kugelkopf (10) mittels des Sicherungsmittels (21, 22) zwischen den beiden Einsatzkörpern (8 und 13) in dem Hohlkörper fixiert (2) ist.

3. Kugelgelenk nach Anspruch 2, **dadurch gekennzeichnet, daß** der Kugelkopf (10) von den beiden Einsatzkörpern (8 und 13) dichtend eingeschlossen ist.

4. Kugelgelenk nach einem der vorhergehenden Ansprüche, **dadurch gekennzeichnet, daß** zumindest ein Einsatzkörper (8, 13) eine ein Schmierstoffmagazin bildende Ausnehmung besitzt.

5. Kugelgelenk nach einem der vorhergehenden Ansprüche, **dadurch gekennzeichnet, daß** der Kugelkopf (10) von dem Einsatzkörper (8, 13) über etwa 180° umschlossen ist.

6. Kugelgelenk nach einem der vorhergehenden Ansprüche, **dadurch gekennzeichnet, daß** der elastische Einsatzkörper (13) an seinem Umfang eine radiale Einschnürung (16) aufweist.

7. Kugelgelenk nach einem der vorhergehenden Ansprüche, **dadurch gekennzeichnet, daß**, der Hohlkörper (2) als einseitig geschlossener Hohlzylinder ausgeführt ist.

8. Kugelgelenk nach einem der vorhergehenden Ansprüche, **dadurch gekennzeichnet, daß** der Hohlkörper (2) eine als Bajonettverschluß (5) ausgeführte Ausnehmung (6) aufweist, welche zum Fixieren des eingesetzten Sicherungsmittels (21, 22) in dem Hohlkörper (2) ausgeführt ist.

9. Kugelgelenk nach Anspruch 9, **dadurch gekennzeichnet, daß** der Bajonettverschluß (5) zur Aufnahme zusätzlicher Sicherungsmittel (21, 22) ausgeführt ist.

10. Kugelgelenk nach einem der vorhergehenden Ansprüche, **dadurch gekennzeichnet, daß** das Sicherungsmittel (21, 22) ein Federblech (20) ist.

11. Kugelgelenk nach einem der vorhergehenden Ansprüche, **dadurch gekennzeichnet, daß** das Sicherungsmittel (21, 22) eine Öffnung zum Durchführen des Kugelkopfes (10) besitzt.

12. Kugelgelenk nach einem der vorhergehenden Ansprüche, **dadurch gekennzeichnet, daß** das Sicherungsmittel (21, 22) Abschnitte aufweist, die als Sperrklinken (19a bis 19f) ausgeführt sind und das Hindurchführen des Kugelkopfes (10) in lediglich einer Richtung gestatten.

13. Kugelgelenk nach einem der vorhergehenden Ansprüche mit einem Hebel (27), **dadurch gekennzeichnet, daß** die Aufnahme (1) an dem Hebel (27) angeordnet ist und in ein Verbindungselement (30) eingreift, welches zur Aufnahme der zu dem Stößel (11) nicht axialen Kräfte ausgeführt ist.

14. Kugelgelenk nach Anspruch 13, **dadurch gekennzeichnet, daß** der Hebel (27) und das Verbindungselement (30) um eine gemeinsame Achse (25) schwenkbar angeordnet sind.

## Claims

1. Ball-and-socket joint having a holder (1) and a tappet (11) which has an end designed as a ball head (10), the holder (1) being provided in particular for a piston rod of a motor vehicle brake cylinder, it being possible for a translatory movement of the tappet (11) to be coupled to a rotational movement of a component connected to the holder (1), in particular of a pedal arm of a brake pedal, via the holder (1) and the ball head (10), the holder (1) comprising a cup-shaped hollow body (2) and an elastic insert body (13) arranged within the hollow body (2), and the ball head (10) being held in the interior of the hollow body (2) by the insert body (13) by means of a securing means (21, 22) and being prestressed against the base of the hollow body (2), the elastic insert body (13) being provided with an opening (15), **characterized in that** the opening (15) is designed elastically such that in the fitted state it bears against the tappet (11) connected to the ball head (10), and for installation purposes can be stretched sufficiently far that the ball head (10) can be passed through it.

2. Ball-and-socket joint according to Claim 1, **characterized in that** the holder (1) has a further insert body (8) arranged in the hollow body (2), so that the ball head (10) is fixed (2) between the two insert bodies (8 and 13) in the hollow body by means of the securing means (21, 22).

3. Ball-and-socket joint according to Claim 2, **characterized in that** the ball head (10) is enclosed in a sealing manner by the two insert bodies (8 and 13).

4. Ball-and-socket joint according to one of the preceding claims, **characterized in that** at least one insert body (8, 13) has a recess forming a lubricant magazine.

5. Ball-and-socket joint according to one of the preceding claims, **characterized in that** the ball head (10) is surrounded over approximately 180° by the insert body (8, 13).

6. Ball-and-socket joint according to one of the preceding claims, **characterized in that** the elastic insert body (13) has a radial constriction (16) on its circumference.

7. Ball-and-socket joint according to one of the preceding claims, **characterized in that** the hollow body (2) is designed as a hollow cylinder closed on one side.

8. Ball-and-socket joint according to one of the preceding claims, **characterized in that** the hollow body (2) has a recess (6) which is designed as a quarter-turn fastener (5) and is designed for fixing the inserted securing means (21, 22) in the hollow body (2).

9. Ball-and-socket joint according to Claim 9, **characterized in that** the quarter-turn fastener (5) is designed for holding additional securing means (21, 22).

10. Ball-and-socket joint according to one of the preceding claims, **characterized in that** the securing means (21, 22) is a spring plate (20).

11. Ball-and-socket joint according to one of the preceding claims, **characterized in that** the securing means (21, 22) has an opening for passing the ball head (10) through it.

12. Ball-and-socket joint according to one of the preceding claims, **characterized in that** the securing means (21, 22) has sections which are designed as detent pawls (19a to 19f) and permit the ball head (10) to be passed through in only one direction.

13. Ball-and-socket joint according to one of the preceding claims, having a lever (27), **characterized in that** the holder (1) is arranged on the lever (27) and engages in a connecting element (30) which is designed to absorb the forces which are not axial with respect to the tappet (11).

14. Ball-and-socket joint according to Claim 13, **characterized in that** the lever (27) and the connecting element (30) are arranged such that they can pivot about a common axis (25).

## Revendications

1. Articulation à rotule avec un dispositif de montage (1) et une tige (11) laquelle présente une extrémité réalisée en tant que rotule (10), le dispositif de montage (1) étant en particulier prévu pour recevoir une tige de piston d'un cylindre de frein d'un véhicule automobile, un mouvement de translation de la tige (11) pouvant être couplé, par le biais du dispositif de montage (1) et de la rotule (10), à un mouvement de rotation d'un élément de construction relié au dispositif de montage (1), en particulier à un bras de pédale d'une pédale de frein, le dispositif de montage (1) comprenant un corps creux (2) en forme de pot et une garniture élastique (13) disposée dans le corps creux (2), la rotule (10) étant maintenue à l'intérieur du corps creux (2) et précontrainte contre le fond du corps creux (2) par la garniture (13) à l'aide d'un moyen de retenue (21, 22), la garniture élastique (13) étant pourvue d'une ouverture (15), **caractérisée en ce que** l'ouverture (15) est réalisée de manière élastique de telle sorte qu'elle repose, à l'état assemblé, contre la tige (11) reliée à la rotule (10) et que, pour permettre le montage de celle-ci, elle est suffisamment extensible pour que la rotule (10) puisse passer à travers.

2. Articulation à rotule selon la revendication 1, **caractérisée en ce que** le dispositif de montage (1) possède en outre une pièce de montage (8) disposée dans le corps creux (2) de sorte que la rotule (10) est fixée dans le corps creux (2), à l'aide du moyen de retenue (21,22), entre la garniture (13) et la pièce de montage (8).

3. Articulation à rotule selon la revendication 2, **caractérisée en ce que** la rotule (10) est enveloppée hermétiquement par la pièce de montage (8) et la garniture (13).

4. Articulation selon l'une des revendications précédentes, **caractérisée en ce qu'**au moins l'une des deux, la pièce de montage (8) ou la garniture (13), possède un évidement faisant office de réservoir de lubrifiant.

5. Articulation selon l'une des revendications précédentes, **caractérisée en ce que** la rotule (10) est enveloppée sur environ 180° par la pièce de montage (8) et la garniture (13).

6. Articulation à rotule selon l'une des revendications précédentes, **caractérisée en ce que** la garniture élastique (13) présente dans sa circonférence un rétrécissement radial (16).

7. Articulation à rotule selon l'une des revendications précédentes, **caractérisée en ce que** le corps creux (2) est réalisé en tant que cylindre creux fermé d'un seul côté.

8. Articulation à rotule selon l'une des revendications précédentes, **caractérisée en ce que** le corps creux (2) présente un évidement (6) réalisé sous forme de verrouillage à baïonnette (5) et est réalisé de manière à fixer le moyen de retenue (21, 22) dans le corps creux (2).

9. Articulation à rotule selon la revendication 9, **caractérisée en ce que** le verrouillage à baïonnette (5) est réalisé de manière à pouvoir recevoir des moyens de retenue (21, 22) supplémentaires.

10. Articulation à rotule selon l'une des revendications précédentes, **caractérisée en ce que** le moyen de retenue (21, 22) est une tôle élastique (20).

11. Articulation à rotule selon l'une des revendications précédentes, **caractérisée en ce que** le moyen de retenue (21, 22) possède une ouverture permettant le passage de la rotule (10).

12. Articulation à rotule selon l'une des revendications précédentes, **caractérisée en ce que** le moyen de retenue (21, 22) présente des parties réalisées sous forme de cliquets d'arrêt (19a à 19f) et permettent le passage de la rotule (10) seulement dans une direction.

13. Articulation à rotule selon l'une des revendications précédentes incluant un levier (27), **caractérisée en ce que** le dispositif de montage (1) est disposé sur le levier (27) et engrène dans un élément d'assemblage (30) lequel est réalisé pour recevoir les forces non axiales par rapport à la tige (11).

14. Articulation à rotule selon la revendication 13, **caractérisée en ce que** le levier (27) et l'élément d'assemblage (30) sont disposés de manière à pivoter autour d'un axe commun (25).
